# EUROPÄISCHE PATENTANMELDUNG

(11) **EP 3 659 834 A2**
(43) Veröffentlichungstag der Anmeldung: **03.06.2020**
(21) Anmeldenummer: 19203283.7
(22) Anmeldetag: 15.10.2019
(51) Int. Cl.: B60G 11/27, B60G 17/052, F16F 9/02, F16F 15/023, F16F 15/027

(54) **LAGERVORRICHTUNG FÜR EINEN LUFTKOMPRESSOR EINES FAHRZEUGS**

(30) Priorität: 15.10.2018 DE 102018125503
(71) Anmelder: AMK HOLDING GMBH & CO. KG, 73230 Kirchheim/Teck (DE)
(72) Erfinder: STEINEPREIS, Daniel, 70186 Stuttgart (DE)
(74) Vertreter: Spachmann, Holger

(57) **Zusammenfassung**

Die Erfindung betrifft eine Lagervorrichtung (76) für einen Luftkompressor (20) eines Fahrzeugs, durch die der Luftkompressor mit einer Karosserie (44) eines Fahrzeugs schwingungsisolierend verbunden ist.

Es wird vorgeschlagen, dass die Lagervorrichtung (76) zumindest eine Luftfeder (48) mit einem elastischen Luftbalg (58) umfasst, wobei die Lagervorrichtung (76) zwischen dem Luftkompressor (20) und der Karosserie (44) angeordnet ist und der Luftbalg (58) an eine Druckluftleitung des Luftkompressors (20) zur Druckluftbefüllung angeschlossen ist.

In einem nebengeordneten Aspekt betrifft die Erfindung einen Luftkompressor (20) eines Fahrzeugs, der über eine vorgenannte Lagervorrichtung (76) mit einer Karosserie (44) des Fahrzeugs pneumatisch einstellbar schwingungsisolierend verbunden ist.

## Beschreibung

Die vorliegende Erfindung betrifft eine Lagervorrichtung eines Luftkompressors eines Fahrzeugs, durch die der Luftkompressor mit einer Karosserie des Fahrzeugs schwingungsisolierend verbunden ist.

### STAND DER TECHNIK

Ein Luftkompressor in einem Fahrzeug dient der Bereitstellung von Druckluft für vielfältige pneumatische Aufgaben. Insbesondere in höherwertigen Personenkraftwagen und Lastfahrzeugen werden Radaufhängungen mit pneumatischen Radfedern, die auch als Luftfedern bezeichnet werden, ausgerüstet, um je nach Fahrsituation und gewünschtem Fahrzeugverhalten eine unterschiedliche Federkennlinie einzustellen.

In der Regel sind derartige Luftkompressoren an einer Stelle des Fahrzeugs mit der Karosserie verbunden, die Betriebsgeräusche und Vibrationen, die beim Betrieb des Kompressors auftreten, gegenüber der Fahrgastzelle zu minimieren. Dennoch konnte bisher keine vollständige geräuschlose und vibrationsarme Anordnung des Kompressors im Fahrzeug erreicht werden.

Um dynamische Kraftübertragungen und/oder Schwingungen zu reduzieren, die von einem Luftkompressor im Betrieb erzeugt werden, sind daher Entkopplungsvorrichtungen für den Luftkompressor eines Fahrzeugs notwendig, wobei eine oder mehrere derartige Entkopplungsvorrichtungen zwischen einer Karosserie des Fahrzeugs und dem Luftkompressor angeordnet ist. Die Entkopplungsvorrichtungen haben die Aufgabe, Eigenschwingungen des Luftkompressors derart von einer Karosserie zu isolieren bzw. zu dämpfen, dass eine Körperschallausbreitung des Luftkompressors weitgehend unterdrückt wird. Durch die Entkopplungsvorrichtung werden möglichst wenige dynamische Kräfte, die vom Luftkompressor im Betrieb erzeugt werden, in die Karosserie übertragen. Auf der anderen Seite werden Stöße und Vibrationen der Karosserie vom Luftkompressor isoliert bzw. nur gedämpft an diesen weitergegeben, so dass dieser verringerten äußeren Stoßbelastungen ausgesetzt ist und somit eine höhere Lebensdauer erreichen kann.

Aus dem Stand der Technik sind beispielsweise Lagervorrichtungen mit Spiralfedern als Entkopplungsvorrichtungen bekannt, wobei über die Spiralfedern mit einer geringen Federsteifigkeit ein hoher Entkopplungsgrad des Kompressors zum Fahrzeug erreicht werden kann.

Bei der bekannten Vorrichtung ergibt sich das Problem, dass während der Fahrt der Luftkompressor ständig an Begrenzungselementen stößt oder die Entkopplungs- bzw. Federvorrichtung Stöße und Vibrationen weiterleitet, so dass sich die Arbeitsgeräusche in der Karosserie akustisch bemerkbar machen und somit Lärm generiert wird. Daneben ist es unmöglich, dass unterschiedliche Reduktionseffekte der dynamischen Kraftübertragung insbesondere im Betrieb des Luftkompressors je nach Vibrationsstärke des Luftkompressors erreicht werden, um eine bessere Entkopplung zu ermöglichen. Letztlich kann sich ein unerwünschtes Resonanzverhalten der Entkopplungsvorrichtung bei bestimmten Drehzahlen des Luftkompressors ergeben, die zu einer erhöhten Lärmentwicklung führt.

So ist beispielsweise aus der DE 10 2006 025 055 A1 eine multi-direktionale Schwingungsentkopplung zur Entkopplung von Schwingungen beschrieben, wobei die Schwingungsentkopplung für eine Aufhängung vibrationserzeugender Maschinen, wie zum Beispiel Motoren auf einem Untergrund, beispielsweise einem Fahrzeugchassis eingesetzt werden kann. Das Lager beruht auf dem Prinzip einer Luftfeder. Diese Schwingungsentkopplung umfasst einen Gummikörper, in dem Druckluft eingeschlossen ist. Hiermit wird erreicht, dass die Schwingungsentkopplung in alle Richtungen möglichst gleich wirksam und in alle Richtungen möglichst gleich belastbar ist. Weiterhin umfasst die Schwingungsentkopplung einen Ring, an dem eine Nut angebracht ist, hiermit können unterschiedliche Varianten von Verbindern eingeklickt werden.

Die EP 3 181 944 A1 offenbart einen Schwingungsisolator, der zur Lagerung von Geräten der Halbleiterindustrie verwendet wird. Der Schwingungsisolator ist mit einem Arbeitsraum als Luftfeder ausgebildet und weist ein Basisteil sowie ein Kopfteil auf. Das Basis- und Kopfteil sind mit einer zu isolierenden Last verbunden. Die Luftfeder besteht aus einem Außengehäuse und einem Innengehäuse, wobei beide Gehäuse über eine elastische Membran miteinander abgeschlossen sind. Für eine Isolationswirkung in vertikaler Richtung ist ein Magnetaktor, der aus Spulen und Magnete besteht, vorgesehen. Für eine Isolationswirkung in horizontaler Richtung ist ein Biegestab vorgesehen, der über eine Schraube mit Kopfteil und über eine Schraube mit dem Innengehäuse verbunden ist. Weiterhin ist ein Druck im Arbeitsraum über ein pneumatisches Regelventil regelbar, und der Arbeitsraum kann sich aufgrund der Elastizität der Membran in vertikaler Richtung bewegen.

Das deutsche Gebrauchsmuster DE 78 17 348 U stellt ein gummielastisches Lager vor, das eine Gummihohlfeder, ein Plattenventil, einen Befestigungsflansch und metallische Stirnwände umfasst. Die Stirnwand ist motorseitig mit einem Motorgehäuse verbunden und die Stirnwand ist motorabgewandt angeordnet, wobei die Stirnwände durch einen zentrisch bereitgestellten Bolzen miteinander starr verbunden sind. Weiterhin sind zwei Kammern durch das Plattenventil getrennt ist, in die eine Flüssigkeit gefüllt wird. Über Ventilöffnungen des Plattenventils sind die Kammern miteinander verbunden.

Die GB 2 124 731 A zeigt einen aufblasbaren Schwingungsdämpfer, der zwei ringförmige Elemente umfasst. In die ringförmigen Elemente kann ein Gas, eine Flüssigkeit oder eine Kombination von einem Gas und einer Flüssigkeit gefüllt werden. Eine Feder des Schwingungsdämpfers kann durch ein anderes ringförmiges Element oder ein weiches Gummielement ersetzt werden. Der Schwingungsdämpfer kann für eine schwere Maschine beispielsweise einen Dieselmotor verwendet werden, um die Schwingungen im Betrieb zu dämpfen.

In der EP 0 049 741 A1 ist ein elastisches Axiallager dargestellt. Im Axiallager sind Ringe aus Gummi mit flüssigkeitsgefüllten Ringen von beiden Seiten gegen ein Tragelement angeordnet.

Weiterhin zeigt die JP S59-175 641 A ein Motorlager für einen Antriebsmotor eines Fahrzeugs, wobei das Motorlager vier Luftfedern umfasst. Um Schwingungen bzw. Vibrationen des Motors gegen eine Karosserie zu reduzieren, ist jede Luftfeder zwischen einer Halterung des Motors und einer Halterung der Karosserie 38 angeordnet, wobei die Luftfeder aus Gummi besteht. Die Luftfedern sind auf der einen Seite mit der Karosserie und auf der anderen Seite mit dem Motor zum Dämpfen der Schwingungen des Motors verbunden. Mit derartigen Luftfedern können jedoch Schwingungen und Vibrationen eines Luftkompressors alleine gegenüber einer Karosserie nicht gedämpft werden. Somit ist der Betrieb eines Luftkompressors gegenüber seiner Stützstruktur / Karosserie alleine hier nicht offenbart oder angesprochen.

In der DE 10 2016 224 081 A1 ist eine Luftfeder zur Federung eines Fahrzeugs beschrieben, wobei die Luftfeder auf der einen Seite über einen Luftfederdeckel an einer Karosserie und auf der anderen Seite über einen Luftfederkolben an einem Radträger befestigt ist. Weiterhin ist ein Luftverdichter in der Luftfeder integriert, so dass ein Luftbalg der Luftfeder unmittelbar mit einem Luftverdichter verbunden ist und direkt mit der vom Luftverdichter erzeugten Druckluft befüllt werden kann. Die Luftfeder mit dem Luftbalg ist folglich an dem Rad angeordnet. Da der Luftbalg unmittelbar durch den in der Luftfeder integrierten Luftverdichters befüllt werden kann, werden alleinig Schwingungen des Rads reduziert.

Die US 5 018 698 A zeigt eine vibrationsisolierende Halterung für eine Pumpe, mit welcher die im Betrieb erfolgenden Vibrationen der Pumpe reduziert werden können. Schwingungen eines Luftkompressors gegenüber einer Karosserie können dadurch nicht reduziert werden.

Die JP S59-13 698 A stellt eine Vorrichtung umfassend einen Luftkompressor und einen Lufttank dar, wobei die von dem Luftkompressor erzeugte Druckluft in den Lufttank eingelassen werden kann. Um Schwingungen eines bewegenden Rads zu reduzieren, ist eine Luftfeder an einem Boden des Lufttanks befestigt ist. Folglich ist eine Luftfeder zum Dämpfen eines bewegenden Rads an der Karosserie angeordnet.

Weitere gattungsgemäße Vorrichtungen sind in der US 6 123 325 A, US 4 564 177 A, JP H06-227 309 A, DE 298 17 737 U1, US 2015 0 345 490 A1, JP H08-296 558 A, EP 1 979 177 B1, EP 0 049 741 A1, GB 2 124 731A, DE 78 17 348 U1, DE 10 2006 025 055 A1 und EP 3 181 944 A1 gezeigt.

Ausgehend von dem obigen Stand der Technik ist es Aufgabe der Erfindung, eine Lagerungsvorrichtung mit einer Luftfeder für einen Luftkompressor eines Fahrzeugs vorzuschlagen, wobei das Volumen der Luftfeder durch Ändern der Druckluftmenge der Luftfeder variierbar ist. Somit werden unterschiedliche Entkopplungseffekte ermöglicht, wobei die Betriebsdruckluft aus dem Luftkompressors selbst entnommen werden kann und eine vereinfachte Federsteuerung erreicht werden kann.

Diese Aufgabe wird durch eine Lagervorrichtung für einen Luftkompressor eines Fahrzeugs nach dem unabhängigen Anspruch gelöst. Vorteilhafte Weiterbildungen der Erfindung sind Gegenstand der Unteransprüche.

### OFFENBARUNG DER ERFINDUNG

Es wird eine Lagervorrichtung für einen Luftkompressor mit einer Karosserie eines Fahrzeugs vorgeschlagen, durch die der Luftkompressor mit einer Karosserie eines Fahrzeugs schwingungsisolierend verbunden ist.

Erfindungsgemäß wird vorgeschlagen, dass die Lagervorrichtung zumindest eine Luftfeder mit einem elastischen Luftbalg umfasst, wobei der Luftbalg an eine Druckluftleitung des Luftkompressors zu steuerbaren Druckluftbefüllung angeschlossen ist.

Mit anderen Worten wird eine einen elastischen Luftbalg aufweisende Luftfeder vorgeschlagen, wobei der Luftbalg vorzugsweise aus Gummi oder einem formschlaffen, flexiblen Material vorgeschlagen wird, wobei die Steifigkeit der Lagervorrichtung durch die Elastizität und das eingeführte Luftdruckvolumen des Luftbalgs geändert werden kann. Schwingungsisolierende Eigenschaft bedeutet, dass der Luftbalg im drucklosen Zustand eine höhere Steifigkeit besitzt, und somit eine geringere Schwingungsisolation aufweist.

Erfindungsgemäß wird vorteilhaft erreicht, dass die aus zumindest einer Luftfeder bestehende Lagervorrichtung zur Entkopplung des Luftkompressors von der Karosserie vorgesehen ist. Die Lagervorrichtung ist dabei zwischen dem Luftkompressor und der Karosserie angeordnet. Im Betrieb des Luftkompressors wird kein Lärm aufgrund von Stößen zwischen dem Luftkompressor und den Spiralfedern umschließenden Begrenzungselementen generiert. Daneben ist durch Einsatz der Lagervorrichtung, die auf der einen Seite mit dem Luftkompressor und auf der anderen Seite mit der Karosserie verbunden ist, die Übertragung von dynamischen Kräften in die Karosserie reduzierbar und somit kann eine bessere Entkopplung erreicht werden.

Weiterhin weist der Luftbalg einen Anschluss zum Verbinden mit einer Druckluftleitung eines gelagerten Luftkompressors auf, der vorzugsweise Druckluft für eine Fahrzeugfederung bereitstellt. Somit kann der Luftbalg im Betrieb des Luftkompressors über die Druckluftleitung mit Druckluft gefüllt und aufgeblasen werden. Hierzu kann beispielsweise über eine Steuereinrichtung wie zum Beispiel eine Elektronikeinheit ein in der Druckluftleitung enthaltenes Ventil angesteuert werden, wobei beim Aufblasen das Ventil in Öffnungsstellung angesteuert wird. Auch kann ungesteuert ein Aufblasen im Betrieb und ein druckloser Zustand im Ruhezustand des Luftkompressors eine relativ einfache adaptive Lagerung ermöglichen.

Alternativ denkbar ist, dass der Luftbalg über eine Druckluftleitung an einen Druckluftspeicher eines Fahrzeugabfederungssystems angeschlossen ist. Über eine andere Druckleitung wird die vom Luftkompressor erzeugte überschüssige Druckluft in den Druckluftspeicher eingebracht, so dass der Druckluftspeicher aufgeblasen werden kann. Um Schwingungen zu isolieren, kann der Luftbalg an den Druckluftspeicher angeschlossen und somit die Druckluft in den Luftbalg geleitet werden. Zum Ansteuern eines Aufblasprozesses kann ein Ventil in der mit dem Luftbalg verbundenen Druckluftleitung vorhanden sein, wobei das Ventil von der Steuereinrichtung kontrolliert werden kann. Je nach Bedarf ist das Ventil zwischen einer Öffnungsstellung und einer Schließstellung verstellbar. Hierdurch kann der Luftbalg steuerbar aufgeblasen und ausgeblasen werden.

Es ist vorteilhaft, dass die Lagervorrichtung mehrere Luftfedern, insbesondere drei und mehr umfassen kann, wobei jede Luftfeder je einen elastischen Luftbalg aufweist. Insbesondere ist der Luftkompressor ausschließlich durch Luftfedern mit der Karosserie verbunden. Für verschiedene Luftkompressoren können unterschiedliche Typen von Lagevorrichtungen mit einer unterschiedlichen Anzahl von Luftfedern zur Reduktion der Kraftübertragung bei Schwingung bzw. Vibration des Luftkompressors eingesetzt werden.

In einer vorteilhaften Weiterbildung kann die Luftfeder zumindest zweistufig ausgebildet sein, und vorzugsweise eine obere Platte und eine untere Platte umfassen, wobei die obere Platte und die untere Platte jeweils entsprechend an einem Oberteil und Unterteil des Luftbalgs angeordnet ist. Die obere Platte und die untere Platte können aus einem formstabilen, harten Material, beispielsweise aus Metall oder Plastik hergestellt werden, und jeweils entsprechend an einer oberen Stirnfläche und einer unteren Stirnfläche des Luftbalgs mit verschiedenen Verbindungsmöglichkeiten wie zum Beispiel durch Ankleben befestigt sein kann. Ist das am Luftbalg angeordnete Ventil ausgeschaltet, kann der Luftkompressor aus einem elastischen Sitz gehoben werden, der aus dem elastischen Luftbalg gebildet ist. Ist das Ventil eingeschaltet, kann der Luftbalg mit der Druckluft vollständig gefüllt werden, so dass der Luftkompressor über die gebildete Luftfeder von der Karosserie entkoppelt sein kann. Im drucklosen Zustand weist der Luftbalg vorteilhaft eine selbstrückstellende Ausgangsform auf, in der die beiden Platten sich gegenüberliegen, und das dazwischenliegende Luftbalgmaterial eine verringerte Entkopplungseigenschaft bereitstellt.

In einer weiteren vorteilhaften Weiterbildung kann sich die zweistufige Luftfeder im Ruhezustand in einer mechanisch festgelegten Ausgangsstellung befinden. Mit anderen Worten kann eine derart Stellung der zweistufigen Luftfeder als die Ausgangsstellung ausgebildet sein, wenn keine Luft im Luftbalg vorhanden ist. In diesem Fall kann die Lagerung des Luftkompressors über das elastische Material des Luftbalgs erfolgen, wobei ein mechanischer Festsitz - zumindest in einer Vorzugsrichtung vertikal zwischen Karosserie und Luftkompressor - zwischen dem Oberteil und dem Unterteil des Luftbalgs erreicht werden kann.

In einer weiteren vorteilhaften Weiterbildung kann in der Ausgangsstellung die obere Platte - bedingt durch eine selbstrückstellende Federwirkung des Luftbalgmaterials - mechanisch formschlüssig in die untere Platte eingreifen, sobald der Luftbalg drucklos ist, so dass in horizontaler Richtung zwischen dem Luftkompressor und der Karosserie eine Bewegung des Luftkompressors mechanisch festgelegt ist und in vertikaler Richtung als Vorzugsrichtung vom Luftkompressor zur Karosserie eine Federspannung von dem Luftbalgwandung ausgeübt wird. In dieser Weiterbildung kann eine Druckluftleitung zum Verbinden des Luftbalgs mit der Atmosphäre über das Ventil vorgesehen sein, wobei die Druckluftleitung einseitig, d. h auf der einen Seite, mit dem Anschluss des Luftbalgs verbunden sein und der Luftbalg anderseitig, d. h auf der anderen Seite, über diese Druckluftleitung zur Atmosphäre entlüftet werden kann. Dadurch, dass die obere und untere Platte ineinander eingreifen und sich zeitgleich das Ventil in Schließstellung befindet, kann der drucklose Luftbalg bereitgestellt sein. Hierdurch kann sich ein horizontaler Festsitz des Luftbalgs ergeben, so dass im Ruhezustand die Lagerung des Luftkompressors in horizontaler Richtung zwischen dem Luftkompressor und der Karosserie fest ist und relativ steif gelagert ist. Dagegen ist eine Federspannung vom Material des Luftbalgs in vertikaler Richtung vom Luftkompressor zur Karosserie bereitgestellt. Mit der Federspannung kann der Luftkompressor von der Karosserie im Ruhezustand hinreichend entkoppelt gelagert werden.

In einer weiteren vorteilhaften Weiterbildung kann die untere Platte zumindest eine Ausnehmung und die obere Platte zumindest einen formkomplementären Vorsprung aufweisen, wobei bevorzugt der Vorsprung und die Ausnehmung im Zentralbereich der entsprechenden Platte ausgeformt sind. Die obere und die untere Platte dienen zur Befestigung des Luftkompressors an der Karosserie. Im Randbereich beider Platten können hierzu wie zum Beispiel Befestigungslöcher vorgesehen sein, durch die Schrauben oder Nieten zur Befestigung der oberen Platte und unteren Platte entsprechend an dem Luftkompressor und der Karosserie geführt werden können. Vorteilhafterweise kann der Vorsprung formkomplementär zum Innenprofil der Ausnehmung ausgebildet sein, so dass die obere Platte in die untere Platte mechanisch festgelegt eingesteckt werden kann. Beim Einstecken kann der Innenoberflächenabschnitt des Luftbalgs bezüglich des Vorsprungs der oberen Platte den innenoberflächenabschnitt des Luftbalgs bezüglich der Ausnehmung der unteren Platte kontaktieren. Hierdurch kann sich die Luftfeder in einer mechanisch festgelegten Ausgangsstellung befinden.

In einer weiteren vorteilhaften Weiterbildung kann im Betriebszustand durch eine Druckbeaufschlagung des Luftbalgs eine federnde Lagerung sowohl in horizontaler Richtung als auch in vertikaler Richtung gebildet sein. Im Betrieb des Luftkompressors kann das Ventil von der Steuereinrichtung gesteuert werden und sich in Öffnungsstellung befinden, so dass die vom Luftkompressor verdichtete Druckluft durch die Druckluftleitung zum Luftbalg geführt werden kann. Je mehr Druckluft im Luftbalg ist, desto größere Federspannung kann von der Luftfeder bereitgestellt sein. Vorteilhafterweise kann durch eine vollständige Füllung des Luftbalgs eine weiche Lagerung erreicht werden, die sowohl in horizontaler Richtung als auch in vertikaler Richtung gebildet ist, so dass unerwünschte Vibrationen oder Körperschall durch Betrieb des Luftkompressors optimal reduziert werden können. Eine Erhöhung des Luftdrucks kann zu einer Erhöhung der Federsteifigkeit und ein Absenken des Luftdrucks zu einer Verringerung der Federsteifigkeit führen, so dass auf Basis des Luftdrucks unterschiedliche Steifigkeitswerte erreicht werden können.

In einer weiteren vorteilhaften Ausführungsform kann ein steuerbares Lagerungswegeventil mit der zweistufigen Luftfeder verbunden sein. Vorteilhafterweise kann ein 3/2-Wegeventil als Lagerungswegeventil angeordnet sein, so dass das Lagerungswegeventil auf verschiedene Schaltungsstellung zur Druckbeaufschlagung, Druckentleerung und Druckverriegelung umgeschaltet werden kann. Das Lagerungswegeventil kann über eine Anschlussleitung an dem Luftbalg angeordnet sein, wobei die Druckluft entweder von dem Luftkompressor oder von dem Druckluftspeicher über die Druckleitung bereitgestellt werden kann. Hierdurch ist eine stufenlose Regelung der Steifigkeit gegeben.

In einer vorteilhaften Ausführungsform kann das steuerbare Lagerungswegeventil zeitlich vorgelagert eine Aktivierung der Luftfeder vor Aktivierung des Luftkompressors erzielen. Dadurch kann eine zeitliche Hysterese gebildet werden, wobei die Aktivierung des Luftlagers bzw. die Aktivierung des Luftkompressors zeitlich vor Einschalten und ein Ablassen der Luftfeder nach Abschalten des Luftkompressors erreicht werden, um auch An- und Ablaufgeräusche des Luftkompressors zu unterdrücken. Somit kann bereits vor dem Start des Luftkompressors eine Luftlagerung des Luftkompressors erfolgen. Eine Unterdrückung von Arbeitsgeräuschen kann so besonders vorteilhaft sichergestellt werden, da auch unterschiedliche Arten von Anfahrgeräuschen des Luftkompressors kompensiert werden können.

In einer vorteilhaften Ausführungsform kann eine Steuereinheit eingerichtet sein, zeitlich vor Aktivierung des Luftkompressors aus einem Druckluftreservoir Druckluft zur Aktivierung der Luftfeder zu ziehen und das steuerbare Lagerungswegeventil zeitlich vorgelagert und/oder zeitlich nachgelagert zu betätigen, insbesondere zeitlich nachgelagert die Luftfeder wieder abzulassen. Auch dadurch kann bereits vor dem Start des Luftkompressors durch das Druckluftreservoir die Luftlagerung des Luftkompressors aktiviert werden. Das Druckluftreservoir kann beispielsweise ein zusätzlicher Drucklufttank oder auch ein bereits im System vorhandener Drucklufttank sein. Durch die zeitlich vorgelagerte Aktivierung und / oder zeitlich nachgelagerte Deaktivierung des Lagerungswegeventils kann besonders vorteilhaft eine akustische Entkopplung zur Karosserie und Unterdrückung von Arbeitsgeräuschen des Luftkompressors erfolgen. Durch eine zeitlich nachgelagerte Deaktivierung des Lagerungswegeventils kann die Luftfedern beim Ausschalten des Luftkompressors verzögert in Ruhestellung gelangen, wodurch beispielsweise Abfahrgeräusche des Luftkompressors kompensiert werden können.

In einer vorteilhaften Ausführungsform kann durch das steuerbare Lagerungswegeventil Druckluft aus einem Druckluftreservoir, insbesondere aus einer Druckluftleitung des Fahrzeugs, aus einer Luftfeder für ein Rad, aus einem Druckluftverbindungssystem des Fahrzeugs, aus einem Druckluftspeicher und/oder aus einem Zusatz-Druckluftspeicher, der Luftfeder zugeführt werden. Die Druckluft kann folglich aus unterschiedlichen Luftquellen bezogen werden. Bevorzugt können zu dem Zeitpunkt, zu welchem der Luftfeder wie oben beschrieben Druckluft zugeführt wird, die Druckluftzuführungen zum Luftkompressor abgeschaltet bzw. blockiert sein. Dafür können weitere Ventile vorgesehen sein.

Beispielsweise kann die Luftfeder 1-10 Sekunden, insbesondere 2-5 Sekunden, vor der Aktivierung des Luftkompressors mit Druckluft befüllt bzw. nach Abschaltung des Luftkompressors drucklos geschaltet werden. Die eben beschriebenen Zeiträume können ebenso unter 1 Sekunde liegen.

In einer weiteren vorteilhaften Weiterbildung kann das Lagerungswegeventil elektrisch steuerbar sein. Das Lagerungswegeventil wird auch als elektrisch betätigtes Ventil bezeichnet. Das Lagerungswegeventil kann an einen elektrischen Anschluss der Steuereinrichtung angeschlossen sein. Mittels einer elektrischen Spannung, die von der Steuereinrichtung ausgegeben wird, kann das Lagerungswegeventil derart betätigt werden, dass ein Elektromagnet als Betätigungselement mit der elektrischen Spannung angesteuert und somit das Umschalten des Ventils eingeleitet werden kann. Es ist vorteilhaft, dass das Lagerungswegeventil elektrisch ansteuerbar ist und keine komplizierte mechanische Verbindung oder umfangreiche pneumatische Vorsteuerungen vorgesehen sind, um das Lagerungswegeventil zu betätigen. Des Weiteren kann der Einsatz eines elektrisch betätigten Ventils zu einer deutlich einfacheren Installation bei geringeren Kosten führen.

In einer weiteren vorteilhaften Weiterbildung kann das Lagerungswegeventil pneumatisch steuerbar sein. Das Lagerungsventil wird als Pneumatikventil bezeichnet. Im Vergleich zur vorigen Weiterbildung ist anstelle eines elektrischen Anschlusses ein Anschluss für die Druckluft vorgesehen, wobei das Lagerungswegeventil mittels einer Steuerdruckluft des Luftdrucksystems umgeschaltet werden kann. Mit einem Pneumatikventil wird ein niedriger Kostenaufwand ermöglicht, und es kann auf zusätzliche, ausfallgefährdete elektrische Komponenten verzichtet werden.

In einer weiteren vorteilhaften Weiterbildung kann das Lagerungswegeventil zwei Anschlüsse aufweisen, wobei ein erster Anschluss mit dem Druckluftausgang des Luftkompressors oder mit einem Druckluftausgang eines Druckluftspeichers verbunden ist, wobei ein zweiter Anschluss über eine Ausgangsleitung mit der Atmosphäre verbunden ist. Hierzu sind eine erste Schaltstellung und eine zweite Schaltstellung vorgesehen. Wird das Lagerungsventil auf die erste Schaltstellung umgeschaltet, kann der Luftbalg mit der unmittelbar vom Luftkompressor erzeugten Druckluft oder der im Druckluftspeicher erhaltenen Druckluft je nach der Verbindung gefüllt werden, so dass sich die Luftfeder im Betriebszustand befinden kann. Wird das Lagerungsventil auf die zweite Schaltstellung umgeschaltet, kann die Druckluft im Luftbalg über die Ausgangsleitung zur Atmosphäre ausgeblasen werden, so dass sich die Luftfeder in den Ruhezustand befinden kann. Hierdurch wird eine einfache Drucksteuerung einer einstellbaren Federsteifigkeit ermöglicht.

In einer weiteren vorteilhaften Ausführungsform kann ein Vibrationssensor an dem Kompressor zur Überwachung von Vibration des Luftkompressors angeordnet sein, wobei eine variierbare Menge der in den Luftbalg geleiteten Druckluft gemäß der Vibrationsstärke des Luftkompressors über das Lagerungswegeventil regulierbar ist. Der Vibrationssensor kann an einen elektrischen Anschluss der Steuereinrichtung angeschlossen sein, wobei der Vibrationssensor die Vibrationsstärke des Luftkompressors erfassen und ein darauf ansprechendes Vibrationssignal erzeugen kann. Das Vibrationssignal wird der Steuereinrichtung übersendet und somit steuert die Steuereinrichtung das Lagerungswegeventil an, um das Lagerungswegeventil auf eine Öffnungsstellung oder eine Schließstellung umzuschalten. Vorteilhafterweise ist die Menge der Druckluft im Luftbalg gemäß der Vibrationsstärke des Luftkompressors änderbar, und ggf. über eine Kennlinie mit dieser korreliert. Mit dem Vibrationssensor können eine adaptive Federungseigenschaft der Lagervorrichtung, insbesondere eine oder mehrere angepasste Luftfedern für verschiedene Vibrationsstärke des Luftkompressors bereitgestellt sein, so dass eine verbesserte Entkopplung des Luftkompressors ermöglicht wird.

Anschließend an das vorherige Ausführungsbeispiel kann in einer weiteren vorteilhaften Weiterbildung bei hoher Vibrationsstärke des Luftkompressors eine dafür angepasste Druckluft in den Luftbalg einbringbar sein. Dies muss nicht unbedingt eine maximale Druckluftstärke sein, sondern kann z.B. kennlinienbasiert eine Druckluftmenge sein, die eine optimale Federsteifigkeit zur Entkopplung bereitstellt. Hierdurch kann eine optimale Entkopplung des Luftkompressors erreicht werden.

In einer weiteren vorteilhaften Ausführungsform kann ein Drucksensor zum Erfassen des Luftdrucks im Luftbalg und zum Erzeugen eines Darauf ansprechenden Drucksignals umfasst sein, wobei der Drucksensor am Eingang des Luftbalgs angeordnet ist. Der Drucksensor kann im Anschlusskanal zwischen der Luftfeder und dem Lagerungswegeventil angeordnet sein, um der Luftdruck an einem Drucklufteingang bzw. Druckluftausgang des Luftbalgs zu erfassen. Der Drucksensor kann sein Signal an einen Anschluss der Steuereinrichtung weitergeben, so dass das Drucksignal der Steuereinrichtung übersendet wird und hiermit das Lagerungswegeventil von der Steuereinrichtung adaptiv angesteuert werden kann.

Vorteilhafterweise sind ein Drucksensor am Drucklufteingang des Luftbalgs und ein Vibrationssensor am Luftkompressor angeordnet. Mit den beiden Sensoren kann eine Fehlermeldung ausgegeben werden, wobei selbst bei angepasstem Luftdruck im Luftbalg, z.B. zur Resonanzunterdrückung, der Luftkompressor unerwartet stark vibriert. Das heißt, wenn eine unerwartete Vibration auftritt, kann ein Fehlerfall durch die beiden Sensoren in Kombination festgestellt werden.

Anschließend an das vorherige Ausführungsbeispiel kann in einer weiteren vorteilhaften Weiterbildung durch Messen des Luftdrucks im Luftbalg eine Menge der Druckluft in den Luftbalg über das Lagerungswegeventil steuerbar geändert sein. Der Drucksensor kann in Echtzeit den Luftdruck im Luftbalg erfassen, hiermit ist die Menge der Druckluft entsprechend der Druckstärke über das Lagerungswegeventil änderbar, das von der Steuereinrichtung gesteuert werden kann. Somit kann der Luftkompressor im Betrieb optimiert entkoppelt werden.

In einem nebengeordneten Aspekt wird ein Luftkompressor eines Fahrzeugs vorgeschlagen, der über eine vorbeschriebene Lagervorrichtung mit einer Karosserie eines Fahrzeugs schwingungsisolierend verbunden ist. Der erfindungsgemäße Luftkompressor umfasst eine Lagervorrichtung nach einem der vorgenannten Ausführungsbeispiele. Eine derartige Lagervorrichtung ist auch als Ersatzteil zum Austausch oder zur Weiterbildung bereits vorhandenes Luftkompressors vorteilhaft einsetzbar.

### ZEICHNUNGEN

Weitere Vorteile ergeben sich aus den vorliegenden Zeichnungsbeschreibungen. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- **Fig. 1**: eine schematische Darstellung einer Druckluftversorgungsvorrichtung mit einer Lagervorrichtung gemäß dem Stand der Technik;
- **Fig. 2**: eine schematische Darstellung einer Druckluftversorgungsvorrichtung mit einer ersten Ausführungsform einer Lagervorrichtung gemäß der Erfindung;
- **Fig. 3**: Seitenansicht der in Fig. 2 im Ruhezustand dargestellten Lagervorrichtung;
- **Fig. 4**: Seitenansicht der in Fig. 2 im Betriebszustand dargestellten Lagervorrichtung;
- **Fig. 5**: eine schematische Darstellung einer Druckluftversorgungsvorrichtung mit einer zweiten Ausführungsform einer Lagervorrichtung der Erfindung;
- **Fig. 6**: eine schematische Darstellung einer Druckluftversorgungsvorrichtung mit einer dritten Ausführungsform einer Lagervorrichtung der Erfindung.

In den Figuren sind gleichartige Elemente mit gleichen Bezugszeichen beziffert. Die Figuren zeigen lediglich Beispiele und sind nicht beschränkend zu verstehen.

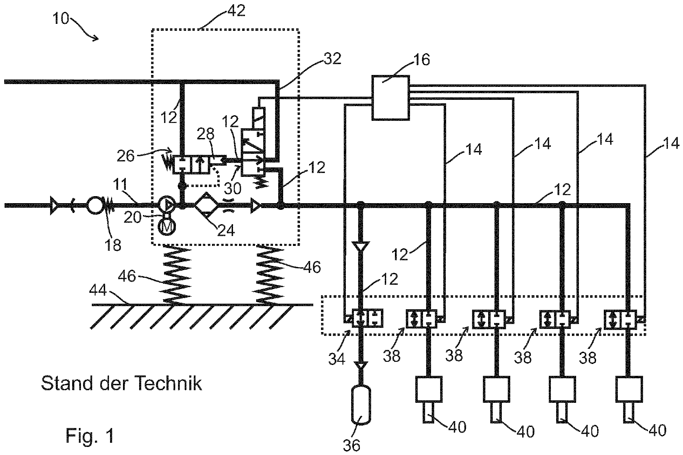

In Fig. 1 ist schematisch eine Druckluftversorgungsvorrichtung 10 mit einer aus dem Stand der Technik bekannten Lagervorrichtung dargestellt, die aus drei Spiralfedern 46 besteht, von denen in der Darstellung nur zwei sichtbar sind. Die Druckluftversorgungsvorrichtung 10 weist einen Luftkompressor 20 auf, der einen motorbetriebenen Luftdruckzylinder, vorzugsweise einem zweistufigen Luftdruckzylinder, umfasst, der auf der Ansaugseite mit einer Zuleitung 11 verbunden ist. In der Zuleitung 11 ist ein Rückschlagventil 18 vorgesehen, das in Saugrichtung und zum Luftkompressor 20 öffnet und gegensinnig mittels Federbelastung schließt. Mit der Druckseite des Luftkompressors 20 ist in einer Druckleitung 12 ein Lufttrockner 24 angeordnet.

Zwischen dem Luftkompressor 20 und dem Lufttrockner 24 zweigt eine weitere Druckleitung 12 ab, in der ein 2/2-Wegeventil 26 als erstes Wegeventil 26 angeordnet ist, wobei ein 3/2-Wegeventil 30 als zweites Wegeventil 30 über eine Druckleitung 12 mit einem pneumatischen Steuereingang 28 des ersten Wegeventils 26 verbunden ist. Bei einem Schaltzustand des zweiten Wegeventils ist der pneumatische Steuereingang 28 des ersten Wegeventils 26 durch das zweite Wegeventil 30 über eine Anschlussleitung 32 mit der Atmosphäre verbunden.

Weiterhin ist jede Luftfeder für ein Rad 40 eines Fahrzeugs an je eine Druckleitung 12 angeschlossen, in der ein 2/2-Wegenventil 38 als drittes Wegeventil 38 angeordnet ist, dessen Steuereingang über eine Steuerleitung 14 mit einer Steuereinrichtung 16 verbunden ist. Über die Steuerleitung 14 kann die Federungscharakteristik des Fahrzeugrades eingestellt werden.

In einer Druckleitung 12 ist ein Druckluftspeicher 36 eingeschaltet, wobei ein 2/2-Wegeventil 34 als Umschaltventil 34 am Drucklufteingang des Druckluftspeichers 36 angeordnet ist.

Durch die Spiralfedern 46, die eine Lagervorrichtung des Stands der Technik darstellen, kann ein den Luftkompressor 20 umfassendes Gehäuse 42 mit einer Karosserie 44 eines Fahrzeugs verbunden sein. Die Spiralfedern 46 sollen eine mechanische Entkopplung der Karosserie erreichen, so dass im Betrieb auftretende Vibrationen reduziert an die Karosserie weitergeleitet werden. Eine Einstellung der Federcharakteristik ist dabei nicht möglich.

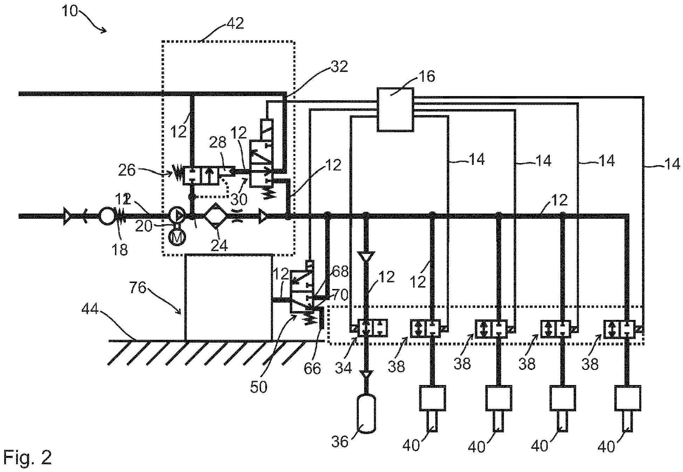

In Fig. 2 ist schematisch eine Druckluftversorgungsvorrichtung 10 gemäß einer ersten Ausführungsform einer erfindungsgemäßen Lagervorrichtung 76 dargestellt.

Abweichend von der Fig. 1 kann ein einen Luftkompressor 20 umfassendes Gehäuse 42 durch die Lagervorrichtung 76 mit einer Karosserie 44 eines Fahrzeugs verbunden sein, wobei die Lagervorrichtung 76 über eine Druckleitung 12 an ein 3/2-Wegeventil 50 als Lagerungswegeventil 50 angeschlossen ist. Über das Lagerungswegeventil 50 kann Druckluft in die pneumatisch betriebene Lagervorrichtung 76 eingebracht oder entnommen werden, so dass eine Federkennlinie der Lagervorrichtung 76 je nach Betriebszustand des Luftkompressors 20 eingestellt werden kann. Das Lagerungswegeventil 50 weist einen ersten Anschluss 68 und einen zweiten Anschluss 70 auf. Druckluft kann aus der Lagervorrichtung 76 über eine Ausgangsleitung 66 zur Atmosphäre ausgeblasen werden.

Weiterhin ist es beispielsweise möglich, zeitlich vor der Aktivierung des Luftkompressors 20 Druckluft der Luftfeder 48 zuzuführen. Diese Druckluft kann beispielsweise aus der Druckleitung 12, aus dem Druckluftspeicher 36 und/oder aus der Luftfeder 40 für ein Rad der Luftfeder 48 zugeführt werden. Während Druckluft aus zumindest einer der Druckluftquellen 12, 36 oder 40 der Luftfeder 48 zugeführt wird, können die Verbindungen der Luftfeder 48 zu den anderen Druckluftquellen 12, 36 oder 40 abgeschaltet sein. Dafür können beispielsweise weitere Ventile im System vorgesehen sein. Es ist weiterhin denkbar, weitere Druckluft aus einem Zusatz-Druckluftspeicher, beispielsweise einer zusätzlichen, wiederaufladbaren Druckluftpatrone (nicht dargestellt) der Luftfeder 48 zuzuführen. Die Steuerung der Zuführung von Druckluft in die Luftfeder 48 vor der Aktivierung des Luftkompressors 20, bzw. die Steuerung des Ablasses von Druckluft nach der Deaktivierung des Luftkompressors 20 kann durch eine Steuereinheit (nicht dargestellt) erfolgen.

Ein motorbetriebener Luftdruckzylinder des Luftkompressors 12 ist auf der Ansaugseite mit einer Zuleitung 11 verbunden. Vor dem Luftkompressor 20 ist ein Rückschlagventil 18 vorgesehen. Mit der Druckseite des Luftkompressors 20 ist in der Druckleitung 12 ein Lufttrockner 24 angeordnet. Zwischen dem Luftkompressor 20 und dem Lufttrockner 24 ist ein 2/2-Wegeventil 26 als erstes Wegeventil 26 in einer Abzweigung vorgesehen, wobei ein 3/2-Wegeventil 30 als zweites Wegeventil 30 über eine Druckleitung 12 an einen pneumatischen Steuereingang 28 des ersten Wegeventils 26 angeschlossen ist. Die von der Druckluftversorgungsvorrichtung 10 erzeugte Druckluft kann über eine Druckleitung 12 in vier Luftfedern für Räder 40 eingespeist werden, wobei jede Luftfeder 40 mit einem 2/2-Wegeventil 38 verbunden ist, dessen Steuereingang über eine Steuerleitung 14 mit einer Steuereinrichtung 16 verbunden ist. Weiterhin ist in einer Druckleitung 12 ein Druckluftspeicher 36 vorgesehen, wobei ein 2/2-Wegeventil 34 als Umschaltventil 34 am Drucklufteingang des Druckluftspeichers 36 angeordnet ist.

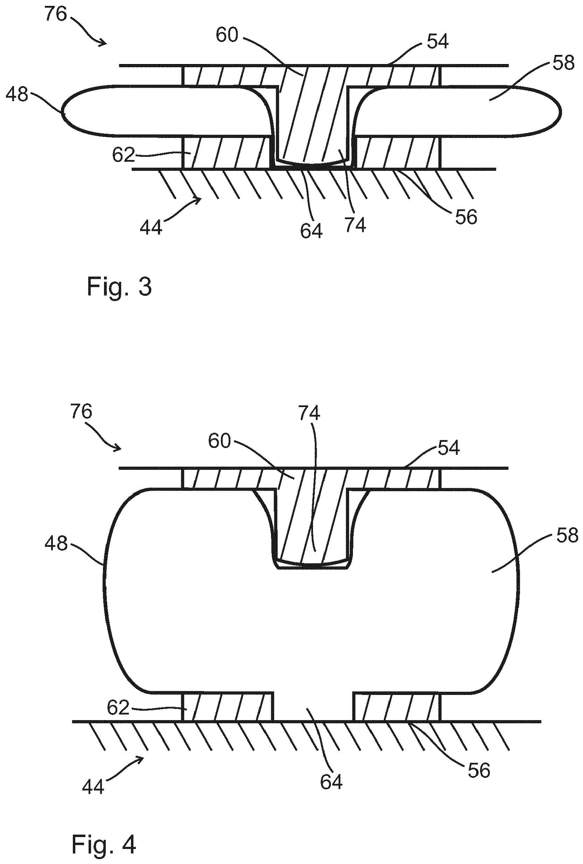

In Fig. 3 und Fig. 4 ist in einer Seitenansicht die in Fig. 2 dargestellte Lagervorrichtung 76 im Detail entsprechend im Ruhezustand (Fig. 3) und im Betriebszustand (Fig. 4) gezeigt. Die Lagervorrichtung 76 umfasst eine obere Platte 60 und eine untere Platte 62 sowie eine Luftfeder 48 mit einem Luftbalg 58, wobei die obere Platte 60 eine Vorsprung 74 und die untere Platte 62 eine formkomplementäre Ausnehmung 64 aufweist. Ein Oberteil 54 der Lagervorrichtung 76 und ein Unterteil 56 der Lagervorrichtung 76 können entsprechend mit dem Luftkompressor 20 und der Karosserie 44 verbunden sein. Durch die Lagervorrichtung 76 kann eine Entkopplung des Luftkompressors 20 sowohl im Ruhezustand als auch im Betriebszustand erreicht werden.

Wie in der Fig. 3 gezeigt befindet sich die Lagervorrichtung 76 im Ruhezustand, bei welchem die obere Plate 50 mechanisch formschlüssig in einer Dämpfungsrichtung vertikal zwischen Karosserie 44 und Luftkompressor 20 in die untere Platte 62 eingreift. Hiermit kann sich ein horizontaler Festsitz des Luftkompressors 20 im Ruhezustand ergeben, und in vertikaler Richtung wird eine steife Lagerung des Luftkompressors 20 durch eine selbstelastische Eigenschaft des drucklosen Luftbalgs 58 bewirkt.

Fig. 4 stellt die Lagervorrichtung 76 im Betriebszustand dar, wobei über die Ausnehmung 64 Druckluft in die Luftfeder 48 bzw. den Luftbalg 58 eingebracht werden kann, so dass über die Luftfeder 48 eine wirkungsvolle Entkopplung des Luftkompressors 20 gegenüber der Karosserie 44 erreicht werden kann.

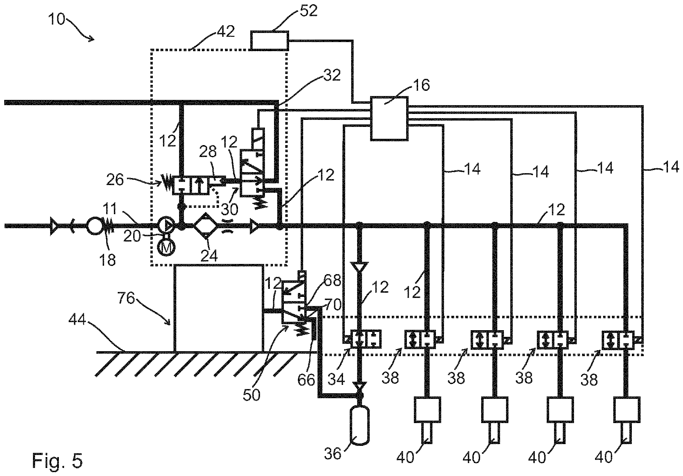

Fig. 5 zeigt schematisch eine Druckluftversorgungsvorrichtung 10 mit einer zweiten Ausführungsform einer Lagervorrichtung 76, durch die ein Gehäuse 42 eines Luftkompressors 20 mit einer Karosserie 44 verbunden sein kann.

In dem Gehäuse 42 ist ein Luftkompressor 20, ein Lufttrockner 24, ein 2/2-Wegeventil 26 als erstes Wegeventil 26 und 3/2-Wegeventil 30 als zweites Wegeventil 30 angeordnet, wobei das zweite Wegeventil 30 über eine Druckleitung 12 an einen pneumatischen Steuereingang 28 des ersten Wegeventils 26 angeschlossen ist. Vor dem Luftkompressor 20 ist ein Rückschlagventil 18 vorgesehen. Die von dem Luftkompressor 20 erzeugte Druckluft kann in vier Luftfedern für Räder 40 eingespeist werden, wobei eine Menge der Druckluft in jeder Luftfeder für Rad 40 durch ein 2/2-Wegeventil 38 steuerbar ist, das als drittes Wegeventil 38 ausgebildet ist. Ein Steuereingang des dritten Wegeventils 38 ist über eine Steuerleitung 14 mit einer Steuereinrichtung 16 verbunden. Weiterhin ist in einer Druckleitung 12 ein Druckluftspeicher 36 vorgesehen, wobei ein 2/2-Wegeventil 34 als Umschaltventil 34 am Drucklufteingang des Druckluftspeichers 36 angeordnet ist.

Abweichend von der Fig. 2 ist die Lagervorrichtung 76 am Druckluftausgang des Druckluftspeichers 36 angeschlossen, wobei zwischen der Lagervorrichtung 76 und dem Druckluftspeicher 36 ein 3/2-Wegeventil als Lagerungswegeventil 50 eingesetzt wird, das ein erster Anschluss 68 und ein zweiter Anschluss 70 aufweist. Die Druckluft kann aus der Lagervorrichtung 76 über eine Ausgangsleitung 66 zur Atmosphäre ausgeblasen werden. Um eine Vibrationsstärke des Luftkompressors 20 zu erfassen, ist ein Vibrationssensor 52 an dem Gehäuse 42 angeordnet, wobei der Vibrationssensor 52 mit der Steuereinrichtung 16 verbunden ist, so dass Vibrationssignale der Steuereinrichtung 16 übersendet werden können. Auf Basis der Vibration kann ein Luftdrucküber das Lagerungswegeventil 50 in der Lagerungsvorrichtung 76 zur Steuerung der Dämpfercharakteristik eingestellt werden. Somit kann abhängig vom jeweiligen Vibrationszustand adaptiv eine optimierte Entkopplung von Karosserie 44 und Luftkompressor 20 erreicht werden.

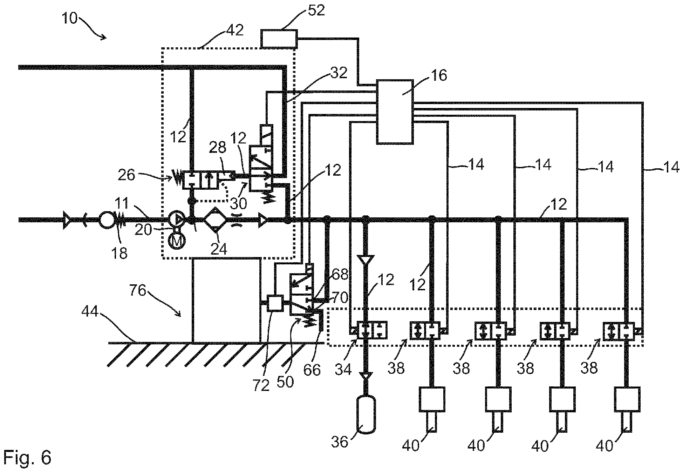

Die Fig. 6 stellt schematisch eine Druckluftversorgungsvorrichtung 10 mit einer dritten Ausführungsform einer Lagervorrichtung 76 dar. In einem Gehäuse 42 ist ein Luftkompressor 20 angeordnet. Mit der Druckseite des Luftkompressors 20 ist in einer Druckleitung 12 ein Lufttrockner 24 vorgesehen. Vor dem Luftkompressor 20 ist ein Rückschlagventil 17 angeordnet. Die Ausgangsseite des Luftkompressors 20 ist mit einem 2/2-Wegeventil 26 verbunden, wobei ein zweites 3/2-Wegeventil 30 an einem pneumatischen Steuereingang 28 des 2/2-Wegeventils 26 angeschlossen ist. Weiterhin kann die Druckluft über eine Druckleitung 12 in vier Luftfedern für Räder 40 eingespeist werden, wobei durch ein 2/2-Wegeventil 38 eine Menge der Druckluft in den Luftfedern für Räder 40 änderbar sein kann. Ein Steuereingang des 2/2-Wegeventils 38 ist über eine Steuerleitung 14 mit einer Steuereinrichtung 16 verbunden. Die Lagervorrichtung 76 ist über eine Druckleitung 12 mit dem Luftkompressor 20 verbunden, so dass die Druckluft von dem Luftkompressor 20 für die Lagervorrichtung 76 bereitgestellt sein kann. Über ein 3/2-Wegeventil 50 ist eine variierbare Menge der Druckluft in der Lagervorrichtung 76 regulierbar, das als Lagerungswegeventil 50 ausgebildet ist.

Abweichend von der Fig. 5 sind nicht nur ein Vibrationssensor 52 sondern weiterhin auch ein Drucksensor 72 für die Lagervorrichtung 76 vorgesehen. Der Drucksensor 72 ist eingerichtet, den im Luftbalg 58 herrschenden Druck zu bestimmen. Hierzu ist der Vibrationssensor 52 an dem Gehäuse 42 und der Drucksensor 72 am Drucklufteingang der Lagervorrichtung 76 angeordnet, um einerseits eine Vibrationsstärke des Luftkompressors 20 und andererseits ein Luftdruck in der Lagervorrichtung 76 zu überwachen. Mit den beiden Sensoren kann beispielsweise eine Fehlermeldung ausgegeben werden, wenn eine unerwartete Vibration auftritt. Die Sensorsignale beider Sensoren 52, 72 können zur verbesserten Lagerregelung des Luftkompressors 20 gegenüber der Karosserie 44 herangezogen werden. Die beiden Sensoren 52, 72 sind hierzu an der Steuereinrichtung 16 angeschlossen, so dass Vibrationssignale und Drucksignale der Steuereinrichtung 16 überwacht werden können, um die Dämpfungssteifigkeit der Lagervorrichtung 76 optimiert einzustellen, und eine Fehlerüberwachung durchführen zu können.

### Bezugszeichenliste

- 10: Druckluftversorgungsvorrichtung
- 11: Zuleitung
- 12: Druckleitung
- 14: Steuerleitung
- 16: Steuereinrichtung
- 18: Rückschlagventil
- 20: Luftkompressor
- 24: Lufttrockner
- 26: 2/2-Wegeventil, erstes Wegeventil
- 28: Pneumatischer Steuereingang
- 30: 3/2-Wegeventil, zweites Wegeventil
- 32: Anschlussleitung
- 34: 2/2-Wegeventil, Umschaltventil
- 36: Druckluftspeicher
- 38: 2/2-Wegeventil, drittes Wegeventil
- 40: Luftfeder für ein Rad
- 42: Gehäuse
- 44: Karosserie
- 46: Spiralfeder
- 48: Luftfeder
- 50: 3/2-Wegeventil, Lagerungswegeventil
- 52: Vibrationssensor
- 54: Oberteil
- 56: Unterteil
- 58: Luftbalg
- 60: Obere Platte
- 62: Untere Platte
- 64: Ausnehmung
- 66: Ausgangsleitung
- 68: Erster Anschluss
- 70: Zweiter Anschluss
- 72: Drucksensor
- 74: Vorsprung
- 76: Lagervorrichtung

## Patentansprüche

1. Lagervorrichtung (76) für einen Luftkompressor (20) eines Fahrzeugs, durch die der Luftkompressor (20) mit einer Karosserie (44) eines Fahrzeugs schwingungsisolierend verbunden ist, **dadurch gekennzeichnet, dass** die Lagervorrichtung (76) zumindest eine Luftfeder (48) mit einem elastischen Luftbalg (58) umfasst, wobei die Lagervorrichtung (76) zwischen dem Luftkompressor (20) und der Karosserie (44) angeordnet ist und der Luftbalg (58) an eine Druckluftleitung des Luftkompressors (20) zur Druckluftbefüllung angeschlossen ist.

2. Lagervorrichtung (76) nach Anspruch 1, **dadurch gekennzeichnet, dass** die Luftfeder (58) zumindest zweistufig ausgeführt ist, und vorzugsweise eine obere Platte (60) und eine untere Platte (62) umfasst, wobei die obere Platte (60) und die untere Platte (62) jeweils entsprechend an einem Oberteil (54) und Unterteil (56) des Luftbalgs (58) angeordnet ist.

3. Lagervorrichtung (76) nach Anspruch 1 oder 2, **dadurch gekennzeichnet, dass** sich die zweistufige Luftfeder (48) im Ruhezustand in einer mechanisch festgelegten Ausgangsstellung befindet.

4. Lagervorrichtung (76) nach Anspruch 3, **dadurch gekennzeichnet, dass** in der Ausgangsstellung die obere Platte (60) mechanisch formschlüssig in die untere Platte (62) eingreift, wobei der Luftbalg (58) drucklos ist, so dass in horizontaler Richtung zwischen dem Luftkompressor und der Karosserie eine Bewegung des Luftkompressors (20) mechanisch festgelegt ist und in vertikaler Richtung vom Luftkompressor zur Karosserie eine Federspannung von dem Luftbalg (58) ausgeübt wird .

5. Lagervorrichtung (76) nach Anspruch 4, **dadurch gekennzeichnet, dass** die untere Platte (62) zumindest eine Ausnehmung (64) und die obere Platte (60) zumindest einen formkomplementären Vorsprung (74) aufweist, wobei bevorzugt der Vorsprung (74) und die Ausnehmung (64) im Zentralbereich der entsprechenden Platte (60, 62) ausgeformt sind.

6. Lagervorrichtung (76) nach Anspruch 1, **dadurch kennzeichnet, dass** im Betriebszustand durch eine Druckbeaufschlagung des Luftbalgs (58) eine federnde Lagerung sowohl in horizontaler Richtung als auch in vertikaler Richtung gebildet ist.

7. Lagervorrichtung (76) nach Anspruch 1, **dadurch gekennzeichnet, dass** ein steuerbares Lagerungswegeventil (50) mit der zweistufigen Luftfeder (48) verbunden ist.

8. Lagervorrichtung (76) nach Anspruch 7, **dadurch gekennzeichnet, dass** das steuerbare Lagerungswegeventil (50) eine Aktivierung der Luftfeder (48) zeitlich vorgelagert vor Aktivierung des Luftkompressors (20) erzielt.

9. Lagervorrichtung (76) nach Anspruch 7 oder 8, **dadurch gekennzeichnet, dass** eine Steuereinheit eingerichtet ist, zeitlich vorgelagert vor Aktivierung des Luftkompressors (20) aus einem Druckluftreservoir Druckluft zur Aktivierung der Luftfeder (48) zu ziehen und das steuerbare Lagerungswegeventil (50) zeitlich vorgelagert und/oder zeitlich nachgelagert zu betätigen.

10. Lagervorrichtung (76) nach einem der Ansprüche 7 bis 9, **dadurch gekennzeichnet, dass** durch das steuerbare Lagerungswegeventil (50) Druckluft aus einem Druckluftreservoir, insbesondere aus einer Druckluftleitung (12) des Fahrzeugs, aus einer Luftfeder (40) für ein Rad, aus einem Druckluftverbindungssystem des Fahrzeugs, aus einem Druckluftspeicher (36) des Fahrzeugs und/oder aus einem Zusatz-Druckluftspeicher, der Luftfeder (48) zugeführt wird.

11. Lagervorrichtung (76) nach einem der Ansprüche 7 bis 10, **dadurch gekennzeichnet, dass** das Lagerungswegeventil (50) elektrisch steuerbar ist.

12. Lagervorrichtung (76) nach einem der Ansprüche 7 bis 10, **dadurch gekennzeichnet, dass** das Lagerungswegeventil (50) pneumatisch steuerbar ist.

13. Lagervorrichtung (76) nach einem der Ansprüche 7 bis 12, **dadurch gekennzeichnet, dass** das Lagerungswegeventil (50) zwei Anschlüsse aufweist, wobei ein erster Anschluss (68) mit dem Druckluftausgang des Luftkompressors (20) oder mit einem Druckluftausgang eines Druckluftspeichers (36) verbunden ist, wobei ein zweiter Anschluss (70) über eine Ausgangsleitung (66) mit der Atmosphäre verbunden ist.

14. Lagervorrichtung (76) nach Anspruch 1 und 7, **dadurch gekennzeichnet, dass** ein Vibrationssensor (52) an dem Kompressor (20) zur Überwachung von Vibration des Luftkompressors (20) angeordnet ist, wobei eine variierbare Menge der in den Luftbalg (58) geleiteten Druckluft gemäß der Vibrationsstärke des Luftkompressors (20) über das Lagerungswegeventil (50) regulierbar ist.

15. Lagervorrichtung (76) nach Anspruch 14, **dadurch gekennzeichnet, dass** bei hoher Vibrationsstärke des Luftkompressors (20) mehr Druckluft in den Luftbalg (58) einbringbar ist.

16. Lagervorrichtung (76) nach Anspruch 1, **dadurch gekennzeichnet, dass** ein Drucksensor (72) zum Erfassen des Luftdrucks im Luftbalg (58) und zum Erzeugen eines darauf ansprechenden Drucksignals umfasst ist, wobei der Drucksensor (72) am Eingang des Luftbalgs (58) angeordnet ist.

17. Lagervorrichtung (76) nach Anspruch 16, **dadurch gekennzeichnet, dass** durch Messen des Luftdrucks im Luftbalg (58) eine Menge der Druckluft in den Luftbalg (58) über das Lagerungswegeventil (50) steuerbar geändert ist.

18. Luftkompressor (20) eines Fahrzeug, der über eine Lagervorrichtung(76) mit einer Karosserie (44) eines Fahrzeugs schwingungsisolierend verbunden ist, **dadurch gekennzeichnet, dass** die Lagervorrichtung (76) nach einem der Ansprüche 1 bis 14 ausgebildet ist.
